(19) Europäisches Patentamt
European Patent Office
Office européen des brevets

(11) **EP 0 672 523 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.7: **B32B 27/20**, B32B 27/32, B65D 65/40, C08K 9/04 // C08K3/36, C08K7/18, C08K7/16

(21) Anmeldenummer: **95103400.8**

(22) Anmeldetag: **09.03.1995**

(54) **Nicht siegelfähige orientierte Polyolefin-Mehrschichtfolie, Verfahren zu ihrer Herstellung und ihre Verwendung**

Non-sealable oriented polyolefin multilayer film, process for making it, and its use

Film multicouche polyolefinique non-scellable et orienté, son procédé de fabrication et son utilisation

(84) Benannte Vertragsstaaten:
**BE DE ES FR GB IT NL**

(30) Priorität: **17.03.1994 DE 4409118**

(43) Veröffentlichungstag der Anmeldung:
**20.09.1995 Patentblatt 1995/38**

(73) Patentinhaber: **Trespaphan GmbH & Co. KG 65479 Raunheim (DE)**

(72) Erfinder:
• **Peiffer, Herbert, Dr.
  D-55126 Mainz (DE)**
• **Murschall, Ursula, Dr.
  D-55283 Nierstein (DE)**
• **Schlögl, Gunter, Dr.
  D-65779 Kelkheim (DE)**

(74) Vertreter: **Luderschmidt, Schüler & Partner GbR Patentanwälte,
Postfach 3929
65029 Wiesbaden (DE)**

(56) Entgegenhaltungen:
**EP-A- 0 234 758        EP-A- 0 402 100
EP-A- 0 612 613        EP-A- 0 613 771
DE-A- 3 801 535        US-A- 4 582 736**

• **PATENT ABSTRACTS OF JAPAN vol. 17, no. 567 (C-1120) (6196) & JP-A-05 163 392 (CHISSO CORPORATION) 29. Juni 1993**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine orientierte Polyolefin-Mehrschichtfolie, umfassend eine polyolefinische Basisschicht und mindestens eine nicht siegelfähige Deckschicht. Die Folien zeichnen sich durch eine niedrige Trübung, einen hohen Glanz und einen niedrigen Reibungskoeffizienten aus.

Transparente orientierte Polypropylenfolien werden z. B. bei der Gianzkaschierung mit Papier oder Karton eingesetzt. Die Folien sind in der Regel nicht siegelbar, da die Kaschierung durch Verklebung von Folie und Papier/ Pappe erfolgt.

Diese Anwendung stellt an die Folienoptik und an die Verarbeitbarkeit der Folie hohe Ansprüche. Die optischen Eigenschaften der Folie werden vorrangig durch den Oberflächenglanz und die Trübung beschrieben. Für die Verarbeitbarkeit sind die Reibung, die Antistatik, das Abriebverhalten, das Dickenprofil, die Rollenaufmachung und die Planlage der Folie von großer Bedeutung.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Die EP-A-0 124 310 beschreibt Folien mit einem niedrigen Reibungskoeffizienten, welche aus einer dicken Basisschicht und einer dünnen Deckschicht bestehen, welche fein verteilte anorganische Partikel enthält. Als anorganische Partikel werden $SiO_2$, Aluminiumsilikate, Natrium-Aluminium-Silikate, Ruß beschrieben. Die Teilchengröße liegt in einem Bereich von 0,2 bis 5,0 µm. Die Partikel wirken sich vorteilhaft auf den Reibungskoeffizienten der Folie aus. Die Folie ist jedoch bezüglich ihrer Rollenaufmachung und Planlage noch stark verbesserungsbedürftig.

Die EP-A-0 350 168 beschreibt eine Folie mit differenzierten Gleiteigenschaften der beiden Oberflächen. Die Deckschichten sind siegelfähig und enthalten als Antiblockmittel $SiO_2$.

Die EP-A-0 234 758 beschreibt eine Polyolefin-Mehrschichtfolie mit einer guten Aufnahmefähigkeit für Beschichtungen auf Wasserbasis. Die Polypropylen-Deckschicht enthält ein Antiblockmittel und Silikonöl. Als geeignete Antiblockmittel werden $SiO_2$, Silikate, Kreide, Ton und ähnliches beschrieben ohne Angaben zur Teilchengröße der verschiedenen Antiblockmittel im einzelnen.

Die DE-A-35 17 795 beschreibt Polypropylen-Mehrschichtfolien, deren Deckschicht eine Kombination von Amin, Polydialkylsiloxan und plättchenförmigem anorganischem Pigment enthält. Die Folie zeichnet sich durch gute Antiblock- und Gleiteigenschaften aus. Das plättchenförmige Pigment hat eine Blattstruktur. Geeignete Pigmente sind Silikate und Carbonate.

Die EP-A-0 242 055 beschreibt die Verwendung eines nicht schmelzbaren, Organosiloxanharzpulvers mit einer dreidimensionalen Netzstruktur als Antiblockmittel in Folien. Sowohl das Siliconharz als auch das Propylenpolymer werden in Form eines Pulvers eingesetzt, welches aus Teilchen mit einer nahezu kugelförmigen Gestalt besteht, wobei diese Teilchenform durch eine entsprechende Gleichung für den tatsächlichen sphärischen Grad charakterisiert wird. Die Folien sollen gegenüber dem Stand der Technik bezüglich ihrer Transparenz, Antiblockeigenschaften. Gleitfähigkeit und bezüglich ihres Aussehens verbessert sein. Die Propylen-Antiblockmittel-Mischung kann auch als Deckschichtmaterial für coextrudierte Mehrschichtfolien eingesetztwerden. Diese coextrudierten Mehrschichtfolien sind jedoch bezüglich ihrer Transparenz und in ihren Glanzwerten noch verbesserungsbedürftig, insbesondere wenn die Deckschichten in üblichen Schichtdicken von über 0,5 mu m aufgebracht werden. Darüber hinaus ist dieses Antiblockmittel sehr viel teurer als herkömmliche Antiblockmittel.

Die deutsche Patentanmeldung P 43 06 154.0 beschreibt die Verwendung eines organisch beschichteten SiO2 als Antiblockmittel in siegelfähigen Folien. Der Reibungskoeffizient und das Verarbeitungsverhalten der Folie sind verbessert. Diese Schrift macht keine Aussage über die räumliche Form der Antiblockteilchen.

Die EP-A-0 353 368 beschreibt die Verwendung des in der EP-A-0 242 055 beschriebenen Siloxanharzpulvers in Verbindung mit einem Hydroxyfettsäureglycerids. Diese Folien eignen sich besonders gut für Vakuumbedampfungen, sind jedoch bezüglich Glanz und Transparenz sehr mangelhaft.

EP 0 612 613 beschreibt eine coextrudierte biaxial orientierte Polypropylenfolie aus einer Basisschicht und einer Deckschicht, die eine Kombination aus anorganischen und/oder organischen Partikel und tertiären aliphatischen Aminen enthält. Diese Folie weiß sehr gute antistatische Eigenschaften auf.

EP 0 402 100 beschreibt eine Folie aus Polypropylen, die kugelförmige SiO2 Teilchen und Glycerinmonostearat enthält. Die Folie weißt eine sehr gute Transparenz, einen gute Glanz und gute Gleiteigenschaften auf.

DE 38 01 535 beschreibt kugelförmige Siliciumdioxid oder Siliciumdioxod-Aluminiumdioxid-Teilchen, die im wesentlichen eine amorphe Struktur haben. Die Teilchen haben kugelförmige gestalt und eine gekerbte Oberfläche.

In Anwendung der bekannten Lehren hat sich gezeigt, dass bekannte Antiblockmittel teilweise nachteilige Auswirkungen auf bestimmte Folieneigenschaften haben. Durch das Antiblockmittel werden die Transparenz und der Glanz der Folie beeinträchtigt. Die Verbesserung der Reibung geht im allgemeinen mit einer Erhöhung der Oberflächenrauhigkeit einher. SiO2 als Antiblockmittel führt bei der Herstellung der Folien zu Ablagerungen an der Düsenlippe und zu Abrieb auf den Walzen. Dadurch müssen die Düsenlippe und die Walzen häufig gereinigt werden, da die Folie sonst während der Produktion schlecht läuft und die Ablagerungen an der Düsenlippe zu einer Streifenbildung auf der Folie führen. Zusätzlich treten Probleme bei der Coronabehandlung auf. An den mit SiO2-Abrieb behafteten Stellen der Walze schlägt die Coronabehandlung durch und führt zum sogenannten unerwünschten Rückseiteneffekt, wodurch beim Weiterverarbeiten der Folie wie z. B. Bedrucken oder Metallisieren reklamationsfähige Fehlstellen auftreten.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch eine Kombination der folgenden Eigenschaften auszeichnet:

- .einen hohen Glanz
- .eine niedrige Trübung
- .einen niedrigen Abrieb
- .einen niedrigen Reibungskoeffizienten
- .eine niedrige Oberflächenrauhigkeit

Die der Erfindung zugrundeliegende Aufgabe wird gelöst durch eine orientierte Polyolefin-Mehrschichtfolie, umfassend eine polyolefinische Basisschicht und mindestens eine nicht siegelfähige Deckschicht aufweist, die 0,01 bis 1 Gew.-%, bezogen auf das Gewicht der Deckschicht, keramische Teilchen enthält, dadurch gekennzeichnet, dass die keramischen Teilchen eine organische und/oder anorganische Beschichtung aufweisen und der folgenden Bedingung genügen:

$$f = \sqrt{A/(\Pi/4)}/D_{max}$$

worin f grösser 0,7 ist und A die Querschnittsfläche in mm und $D_{max}$ den maximalen Durchmesser in mm der Querschnittsfläche bedeuten.

Überraschenderweise beeinträchtigt die Einarbeitung der annähernd kugelförmigen keramischen Teilchen in die Homopolymerdeckschicht die ausgezeichnete Transparenz der Folie nur sehr wenig. Es ist aus dem Stand der Technik bekannt, dass die Einarbeitung partikelförmiger Füllstoffe in eine Homopolymer-Basisschicht beim Verstrecken zur Bildung von vakuolenartigen Hohlräumen in der Schicht führt (EP-A-0 083 495). Je grösser die Partikelgrösse der Füllstoffe ist, desto grösser sind die gebildeten Vakuolen. Diese füllstoffhaltigen Folien sind durch die Vakuolen nahezu undurchsichtig und weisen ein charakteristisches sogenanntes "opakes" Aussehen auf.Es war daher ausserordentlich überraschend, dass die erfindungsgemässen Folien in ihrer Transparenz kaum beeinträchtigt sind, da für einen Fachmann mit der Bildung von Vakuolen in der Homopolymerdeckschicht durch die kugelförmigen Teilchen und damit mit einer erheblichen Eintrübung der Folie zu rechnen war. Es wurde weiterhin völlig unerwartet gefunden, daß die erfindungsgemäße Folie kaum mehr Abrieberscheinungen bei der Produktion oder der Weiterverarbeitung zeigt.

Die Basisschicht der erfindungsgemäßen Mehrschichtfolie enthält im wesentlichen ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält im allgemeinen 90 bis 100 Gew.-%, vorzugsweise 95 bis 100 Gew.-%, insbesondere 98 bis 100 Gew.-%, Propylen und besitzt im allgemeinen einen Schmelzpunkt von 120 °C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Im allgemeinen kann die Basisschicht Gleitmittel, Antistatika, Stabilisatoren und/oder Neutralisationsmittel in jeweils wirksamen Mengen sowie gegebenenfalls Kohlenwasserstoffharz enthalten.

Die erfindungsgemäße Mehrschichtfolie kann gegebenenfalls (eine) weitere zwischen der Basis- und der Deckschicht aufgebrachte Zwischenschicht/en umfassen. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden.

In einer bevorzugten Ausführungsform der erfindungsgemäßen Folie wird das Propylenpolymere der Basisschicht und/oder der Zwischenschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ =    Schmelzflußindex des Propylenpolymeren vor dem Zusatz des organischen Peroxids

$MFI_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Polyolefinfolie umfaßt weiterhin mindestens eine nicht siegelfähige Deckschicht. Diese Deckschicht enthält im wesentlichen ein Propylenhomopolymer und annähernd kugelförmige keramische Teilchen sowie gegebenenfalls weitere zugesetzte Additive in jeweils wirksamen Mengen. Im allgemeinen enthält die Deckschicht 75 bis nahezu 100 Gew.-%, insbesondere 90 bis 99,5 Gew.-%, des Propylenhomopolymeren.

Das Propylenhomopolymere enthält im allgemeinen 95 bis 100 Gew.-%, vorzugsweise 98 bis 100 Gew.-%, Propylen und besitzt im allgemeinen einen Schmelzpunkt von 140 °C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 3 Gew.-% oder weniger, Copolymere von Propylen mit $C_4$-$C_8$-$\alpha$-Olefinen mit einem $\alpha$-Olefingehalt von 3 Gew.-% stellen bevorzugte Propylenpolymere für die Deckschicht dar, wobei isotaktisches Propylenhomopolymer besonders bevorzugt ist. Die angegebenen Gewichtsprozente beziehen sich auf das jeweilige Polymere.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Erfindungsgemäß enthält die Deckschicht annähernd kugelförmige Teilchen, welche im wesentlichen aus einem keramischen Material bestehen und eine Beschichtung aus einer organischen und/oder anorganischen Substanz aufweisen. Annähernd kugelförmige Teilchen umfassen im Sinne der vorliegenden Erfindung Teilchen, die der folgenden Bedingung genügen:

$$f = \sqrt{A/(\pi/4)}/D_{max}$$

worin f größer 0,7, vorzugsweise 0,8 bis 1, insbesondere 0,9 bis 1, ist und A die Querschnittsfläche in mm$^2$ und $D_{max}$ den maximalen Durchmesser in mm der Querschnittsfläche bedeuten. Der Faktor f ist Maß für den Grad der Kugelform der Teilchen. Je näher der Wert für f bei 1 liegt, desto näher kommt die Form der Teilchen der idealen Kugelform.

Als keramisches Material sind Natrium- und Aluminiumsilicate sowie entsprechende Mischsilicate bevorzugt. Der mittlere Teilchendurchmesser liegt im allgemeinen im Bereich von 0,5 bis 10 µm, vorzugsweise 1 bis 5 µm. Die Antiblockmittelteilchen sind im wesentlichen frei von Siloxanharzverbindungen. Gegebenenfalls weisen die kugelförmigen Teilchen eine organische und/oder anorganische Beschichtung auf, wobei auch diese Beschichtung im wesentlichen frei von Siloxan ist.

Zu den besonders geeigneten anorganischen Beschichtungen gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilicat oder Kieselsäure, in der wäßrigen Suspension ausgefällt.

Gegebenenfalls kann die Beschichtung auch aus organischen Verbindungen mit polaren und unpolaren Gruppen bestehen bzw. diese enthalten. Bevorzugte organische Verbindungen sind Alkanole und Fettsäuren mit 8 bis 30 Kohlenstoffatomen in der Alkylgruppe, insbesondere Fettsäuren und primäre n-Alkanole mit 12 bis 24 Kohlenstoffatomen, sowie Maleinsäureanhydrid, Polypropylen- und Polyethylenwachse.

Überraschenderweise tritt bei den erfindungsgemäß verwendeten kugelförmigen keramischen Teilchen ein Zusammenwirken von Struktur und Substanz der Antiblockmittelteilchen auf. Es wurde gefunden, daß Folien mit bekannten kugelförmigen Teilchen aus Siliconharz in der Deckschicht eine schlechtere Trübung und einen schlechteren Glanz aufweisen. Gegenüber bekannten Antiblockmittelteilchen mit einer organischen Beschichtung wurde bei der erfindungsgemäßen Folie eine völlig unerwartete Verbesserung von Glanz, Trübung, Reibung und Oberflächenrauhigkeit der Folie gefunden.

Die erfindungsgemäße Mehrschichtfolie umfaßt die vorstehend beschriebene Basisschicht und mindestens eine Deckschicht sowie gegebenenfalls weitere Schichten. Bevorzugt sind dreischichtige Ausführungsformen, welche auf beiden Seiten der Basisschicht eine Deckschicht aufweisen, welche bezüglich ihrer Dicke und Zusammensetzung gleich oder verschieden sein können. Daneben sind fünfschichtige Ausführungsformen bevorzugt, welche eine Basisschicht und auf beiden Seiten der Basisschicht aufgebrachte Zwischenschichten und beidseitige Deckschichten aufweisen.

Die Gesamtdicke der erfindungsgemäßen Polyolefin-Mehrschichtfolie kann innerhalb weiter Grenzen variieren und richtet sich nach dem beabsichtigten Einsatz.

Sie beträgt vorzugsweise 3 bis 100 μm, insbesondere 5 bis 60 μm, wobei die Basisschicht etwa 50 bis 97 % der Gesamtfoliendicke ausmacht.

Die Dicke der nicht siegelfähigen Deckschicht/en ist im allgemeinen größer als 0,1 μm und liegt vorzugsweise im Bereich von 0,3 bis 2 μm, insbesondere 0,5 bis 1,5 μm, wobei beidseitige Deckschichten gleich oder verschieden dick sein können.

Die Dicke der gegebenenfalls vorhandenen Zwischenschicht/en beträgt im allgemeinen jeweils unabhängig voneinander 1 bis 12 μm, wobei Zwischenschichtdicken von 2 bis 8 μm, insbesondere 3 bis 6 μm, bevorzugt sind. Die angegebenen Werte beziehen sich jeweils auf eine Zwischenschicht.

Neben diesem ausgewählten Deckschichtadditiv kann die erfindungsgemäße Mehrschichtfolie in einer oder mehreren Schichten in einer oder mehreren Schichten zusätzlich Neutralisationsmittel, Stabilisatoren, Gleitmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Dihydrotalcit, Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 m$^2$/g. Im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Die Kohlenwasserstoffharze werden bevorzugt der Basisschicht und/oder der/den Zwischenschicht/en zugesetzt. Die wirksame Menge an niedrigmolekularem Harz beträgt 1 bis 20 Gew.-%, vorzugsweise 2 bis 10 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C$_1$-C$_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder via Masterbatch-Technik zugegeben werden. Die den einzelnen Schichten der Folie entsprechenden Schmelzen werden dann gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 20 bis 90 °C zu halten.

Die Temperaturen, bei denen Längs- und Querstreckung durchgeführt werden, können variieren. Im allgemeinen wird die Längsstreckung vorzugsweise bei 100 bis 150 °C und die Querstreckung vorzugsweise bei 150 bis 180 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie ist gegenüber bekannten Folien mit niedrigem Reibungskoeffizienten in ihrem Glanz und in ihrer Trübung verbessert und zeichnet sich ebenfalls durch einen sehr niedrigen Reibungskoeffizienten und durch eine niedrige Oberflächenrauhigkeit aus. Der Gleitreibungskoeffizient von gleitmittelfreien Ausführungsformen der Folien liegt im allgemeinen im Bereich von 0,3 bis 0,7, vorzugsweise 0,3 bis 0,5. Folien, welche zusätzlich ein Gleitmittel wie z. B. Fettsäureamid, insbesondere Erucasäureamid, enthalten, haben einen noch weiter erniedrigten Gleitreibungskoeffizienten. Dieser liegt bei einer Folie mit Erucasäureamid in der Basisschicht im allgemeinen im Bereich von 0,05 bis 0,3, vorzugsweise 0,1 bis 0,2. Der Glanz der erfindungsgemäßen Folie liegt im Bereich von 100 bis 150, vorzugsweise 110 bis 140. Die Trübung der transparenten Ausführungsformen liegt im Bereich von 0,2 bis 2,5, vorzugsweise im Bereich von 0,5 bis 2,0.

Die Erfindung wird nun anhand von Ausführungsbeispielen noch näher erläutert.

Vergleichsbeispiel B1

Es wurde durch Coextrusion und anschließende stufenweise Orientierung in Längs- und Querrichtung eine dreischichtige Folie mit einer Gesamtdicke von 12 μm und einem ABA-Schichtaufbau hergestellt, d. h. die Basisschicht B war von zwei gleichen Deckschichten A umgeben.

Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Propylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).

Die polyolefinischen Deckschichten bestanden im wesentlichen aus einem isotaktischen Propylenhomopolymeren mit einem n-heptanlöslichen Anteil von 4,0 Gew.-% und einem Schmelzpunkt von 160 °C. Der Schmelzflußindex des Homopolymeren betrug 3,6 g/10 min (DIN 53 735). Die Deckschichten enthielten 0,33 Gew.-% eines keramischen, kugelförmigen Antiblockmittels mit einem mittleren Teilchendurchmesser von 2 μm. Die Dicke der Deckschichten betrug jeweils 0,4 μm.

**Vergleichsbeispiel 1**

Beispiel B1 wurde wiederholt. Als Antiblockmittel wurden jedoch 0,33 Gew.-% eines vernetzten Siliconharzpulvers mit einem mittleren Teilchendurchmesser von 2 μm (®Tospearl 20 der Firma Toshiba Silicone Co., Ltd.) eingesetzt.

**Vergleichsbeispiel 2**

Beispiel B1 wurde wiederholt. Als Antiblockmittel wurden jedoch 0,33 Gew.-% eines organisch gecoateten Siliciumdioxids mit einem mittleren Teilchendurchmesser von 2 μm (®Sylobloc 44 der Firma Grace) eingesetzt.

**Vergleichs Beispiel B2**

Beispiel 1 wurde wiederholt. Die Basisschicht enthielt jedoch kein Erucasäureamid.

**Vergleichsbeispiel 3**

Vergleichsbeispiel 1 wurde wiederholt. Die Basisschicht enthielt jedoch kein Erucasäureamid.

**Vergleichsbeispiel 4**

Vergleichsbeispiel 2 wurde wiederholt. Die Basisschicht enthielt jedoch kein Erucasäureamid.

Die Eigenschaften der Folien gemäß den Beispielen und Vergleichsbeispielen sind in der nachstehenden Tabelle zusammengefaßt.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Reibung

Die Reibung wurde in Anlehnung an DIN 53 375 bestimmt. Die Gleitreibungszahl wurde 14 Tage nach der Produktion gemessen.

Oberflächenspannung

Die Oberflächenspannung wurde mittels der sogenannten Tintenmethode (DIN 53 364) bestimmt.

Rauhigkeit

Die Rauhigkeit wurde nach DIN 4768 bei einem Cut-off von 0,25 mm bestimmt.

Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**TABELLE**

| | Glanz Meßwinkel 20° | Trübung Hölz 4lagig | Trübung ASTM-D 1003 1lagig | Gleitreibungszahl A./.B | Rauhigkeit A./.A | Rauhigkeit B./.B |
|---|---|---|---|---|---|---|
| B1 | 140 | 10 | 0,7 | 0,18 | 0,35 | 0,38 |
| VB1 | 125 | 18 | 1,2 | 0,17 | 0,37 | 0,36 |
| VB2 | 120 | 17 | 1,3 | 0,25 | 0,41 | 0,45 |
| B2 | 140 | 9 | 0,6 | 0,41 | 0,34 | 0,37 |
| VB3 | 125 | 17 | 1,1 | 0,40 | 0,38 | 0,36 |
| VB4 | 120 | 16 | 1,2 | 0,45 | 0,37 | 0,39 |

B = Beispiel
VB = Vergleichsbeispiel
A = Walzenseite
B = Luftseite

**Patentansprüche**

1. Orientierte Polyolefin-Mehrschichtfolie, umfassend eine polyolefinische Basisschicht und mindestens eine nicht siegelfähige Deckschicht, die 0,01 bis 1 Gew.-%, bezogen auf das Gewicht der Deckschicht, keramische Teilchen enthält, **dadurch gekennzeichnet, dass** die keramischen Teilchen eine organische und/oder anorganische Beschichtung aufweisen und der folgenden Bedingung genügen:

$$f = \sqrt{A/(\Pi/4)}/D_{max}$$

worin f grösser 0,7 ist und A die Querschnittsfläche der Teilchen in mm und $D_{max}$ den maximalen Durchmesser in mm dieser Querschnittsfläche bedeuten.

2. Polyolefin-Mehrschichtfolie nach Anspruch 1, **dadurch gekennzeichnet, dass** die kugelförmigen keramischen Teilchen einen mittleren Teilchendurchmesser von 0,5 bis 10 µm, vorzugsweise 1 bis 5 µm, aufweisen.

3. Polyolefin-Mehrschichtfolie nach einem der Ansprüche 1 bis 2, **dadurch gekennzeichnet, dass** die kugelförmigen keramischen Teilchen im wesentlichen aus Natrium-, Aluminium- oder entsprechenden Mischsilicaten bestehen.

4. Polyolefin-Mehrschichtfolie nach einem der Ansprüche 1 bis 3, **dadurch gekennzeichnet, dass** die kugelförmigen keramischen Teilchen im wesentlichen kein vernetztes Siliconharz enthalten.

5. Polyolefin-Mehrschichtfolie nach einem der Ansprüche 1 bis 4, **dadurch gekennzeichnet, dass** f grösser 0,8 bis 1, insbesondere 0,9 bis 1, ist.

6. Polyolefin-Mehrschichtfolie nach einem der Ansprüche 1 bis 5, **dadurch gekennzeichnet, dass** die Deckschicht eine Dicke von 0,1 bis 2 µm aufweisen.

7. Polyolefin-Mehrschichtfolie nach einem der Ansprüche 1 bis 6, **dadurch gekennzeichnet, dass** die Deckschicht aus isotaktischem Propylenhomopolymer aufgebaut ist.

8. Polyolefin-Mehrschichtfolie nach einem der Ansprüche 1 bis 7, **dadurch gekennzeichnet, dass** die Basisschicht aus isotaktischem Propylenhomopolymer aufgebaut ist.

9. Polyolefin-Mehrschichtfolie nach einem der Ansprüche 1 bis 7, **dadurch gekennzeichnet, dass** die Basisschicht aliphatische Säureamide und tertiäres aliphatisches Amin enthält.

10. Polyolefin-Mehrschichtfolie nach einem der Ansprüche 1 bis 7, **dadurch gekennzeichnet, dass** die Folie auf der gegenüberliegenden Seite eine weitere Deckschicht aufweist.

11. Polyolefin-Mehrschichtfolie nach einem der Ansprüche 1 bis 7, **dadurch gekennzeichnet, dass** die zwischen der Basisschicht und der oder den Deckschicht/en ein- oder beidseitig Zwischenschichten angebracht ist.

12. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 20 und 90 °C liegt, abgezogen wird, die Folie biaxial gestreckt wird mit einem Längsstreckverhältnis von 4:1 bis 7:1 und einem Querstreckverhältnis von 7:1 bis 11:1, die biaxial gestreckte Folie thermofixiert, gegebenenfalls coronabehandelt und anschliessend aufgewickelt wird.

13. Verwendung einer Polyolefin-Mehrschichtfolie nach einem oder mehreren der Ansprüche 1 bis 7 als Verpackungsfolie.

14. Verwendung einer Polyolefin-Mehrschichtfolie nach einem oder mehreren der Ansprüche 1 bis 7 zur Bedruckung und Kaschierung.

15. Laminat, umfassend eine Polyolefin-Mehrschichtfolie nach einem oder mehreren der Ansprüche 1 bis 7 und Papier oder Pappe oder weitere Folie aus thermoplastischem Kunststoff.

**Claims**

1. Oriented multilayer polyolefin film including a polyolefinic base layer and at least one non-heat-sealable top layer which comprises from 0.01 to 1% by weight, based on the weight of the top layer, of ceramic particles, **characterized in that** the ceramic particles have an organic and/or inorganic coating and satisfy the following condition:

$$f = \sqrt{A/(\pi/4)}/D_{max}$$

in which f is greater than 0.7 and A is the cross-sectional area of the particles in $mm^2$ and $D_{max}$ is the maximum diameter of this cross-sectional area in mm.

2. Multilayer polyolefin film according to Claim 1, **characterized in that** the spherical ceramic particles have a mean particle diameter of from 0.5 to 10 $\mu$m, preferably from 1 to 5 $\mu$m.

3. Multilayer polyolefin film according to one of Claims 1 and 2, **characterized in that** the spherical ceramic particles essentially consist of sodium silicate, aluminium silicate or corresponding mixed silicates.

4. Multilayer polyolefin film according to one of Claims 1 to 3, **characterized in that** the spherical ceramic particles essentially contain no crosslinked silicone resin.

5. Multilayer polyolefin film according to one of Claims 1 to 4, **characterized in that** f is greater than from 0.8 to 1, in particular from 0.9 to 1.

6. Multilayer polyolefin film according to one of Claims 1 to 5, **characterized in that** the top layer has a thickness of from 0.1 to 2 $\mu$m.

7. Multilayer polyolefin film according to one of Claims 1 to 6, **characterized in that** the top layer is built up from isotactic propylene homopolymer.

8. Multilayer polyolefin film according to one of Claims 1 to 7, **characterized in that** the base layer is built up from isotactic propylene homopolymer.

9. Multilayer polyolefin film according to one of Claims 1 to 7, **characterized in that** the base layer comprises aliphatic acid amides and tertiary aliphatic amine.

10. Multilayer polyolefin film according to one of Claims 1 to 7, **characterized in that** the film has a further top layer on the opposite side.

11. Multilayer polyolefin film according to one of Claims 1 to 7, **characterized in that** an interlayer or interlayers is (are) applied on one or both sides between the base layer and the top layer(s).

12. Process for the production of the multilayer polyolefin film according to Claim 1, in which the melts corresponding to the individual layers of the film are coextruded through a flat-film die, the coextruded film is taken off over a take-off roll whose temperature is between 20 and 90°C, the film is biaxially stretched with a longitudinal stretching ratio of from 4:1 to 7:1 and a transverse stretching ratio of from 7:1 to 11:1, and the biaxially stretched film is heat-set, optionally corona-treated and subsequently wound up.

13. Use of a multilayer polyolefin film according to one or more of Claims 1 to 7 as packaging film.

14. Use of a multilayer polyolefin film according to one or more of Claims 1 to 7 for printing and lamination.

15. Laminate including a multilayer polyolefin film according to one or more of Claims 1 to 7 and paper or board or a further thermoplastic film.

**Revendications**

1. Film multicouches de polyoléfine orienté, comprenant une couche de base en polyoléfine et au moins une couche de surface non scellable qui contient 0,01 à 1 % en poids de particules céramique, rapporté au poids de la couche de surface, **caractérisé en ce que** les particules céramique présentent une enduction organique et/ou inorganique et répondent à la condition suivante :

$$f = \sqrt{A/(\pi/4)}/D_{max}$$

f étant supérieur à 0,7 et A étant la superficie de section des particules en mm$^2$ et $D_{max}$ le diamètre maximal en mm de cette superficie de section.

2. Film multicouches de polyoléfine selon la revendication 1, **caractérisé en ce que** les particules céramique sphériques font état d'un diamètre de particule moyen de 0,5 à 10 µm, de préférence de 1 à 5 µm.

3. Film multicouches de polyoléfine selon l'une ou l'autre des revendications 1 à 2, **caractérisé en ce que** les particules céramique sphériques se composent pour l'essentiel de silicate de sodium, de silicate d'aluminium ou de silicates mixtes correspondants.

4. Film multicouches de polyoléfine selon l'une ou l'autre des revendications 1 à 3, **caractérisé en ce que** les particules céramique sphériques ne contiennent pour l'essentiel pas de résine silicone réticulée.

5. Film multicouches de polyoléfine selon l'une ou l'autre des revendications 1 à 4, **caractérisé en ce que** f est supérieur à 0,8 jusqu'à 1, de préférence de 0,9 à 1.

6. Film multicouches de polyoléfine selon l'une ou l'autre des revendications 1 à 5, **caractérisé en ce que** la couche de surface a une épaisseur de 0,1 à 2 µm.

7. Film multicouches de polyoléfine selon l'une ou l'autre des revendications 1 à 6, **caractérisé en ce que** la couche de surface est constituée par un homopolymère de propylène isotactique.

8. Film multicouches de polyoléfine selon l'une ou l'autre des revendications 1 à 7, **caractérisé en ce que** la couche de base est constituée par un homopolymère de propylène isotactique.

9. Film multicouches de polyoléfine selon l'une ou l'autre des revendications 1 à 7, **caractérisé en ce que** la couche de base contient des amides d'acide aliphatiques et un amine aliphatique tertiaire.

10. Film multicouches de polyoléfine selon l'une ou l'autre des revendications 1 à 7, **caractérisé en ce que** le film possède sur la face opposée une autre couche de surface.

11. Film multicouches de polyoléfine selon l'une ou l'autre des revendications 1 à 7, **caractérisé en ce que**, entre la couche de base et la ou les couche (s) de surface, est/sont appliquée(s) une /des couche(s) intermédiaire(s) sur une face ou sur les deux faces.

12. Procédé destiné à la fabrication d'un film multicouches de polyoléfine selon la revendication 1, avec lequel les matières fondues correspondant à chacune des couches du film sont coextrudées à travers une filière plate, le film coextrudé étant débité sur un rouleau débiteur dont la température se situe entre 20 et 90 °C, le film étant biaxialement étiré dans un rapport d'étirage longitudinal de 4 à 1 jusqu'à 7 à 1 et dans un rapport d'étirage transversal de 7 à 1 jusqu'à 11 à 1, le film biaxialement étiré étant thermofixé, le cas échéant soumis à un traitement corona et ensuite mis en bobine.

13. Utilisation d'un film multicouches de polyoléfine selon l'une ou plusieurs des revendications 1 à 7 en tant que film d'emballage.

14. Utilisation d'un film multicouches de polyoléfine selon l'une ou plusieurs des revendications 1 à 7 destiné à l'impression ou au contre-collage.

15. Complexe comprenant un film multicouches de polyoléfine selon l'une ou plusieurs des revendications 1 à 7, et du papier ou du carton ou un autre film en un matériau thermoplastique.